# EUROPÄISCHE PATENTANMELDUNG

(11) **EP 1 775 502 A1**
(43) Veröffentlichungstag der Anmeldung: **18.04.2007**
(21) Anmeldenummer: 05022605.9
(22) Anmeldetag: 17.10.2005
(51) Int. Cl.: F16J 15/32

(54) **Verfahren zum Befestigen einer Bürstendichtung**

(71) Anmelder: SIEMENS AKTIENGESELLSCHAFT, 80333 München (DE)
(72) Erfinder: Bentele, Stefan, 45475 Mülheim an der Ruhr (DE); Neef, Matthias, Dr., 45468 Mülheim an der Ruhr (DE); Sürken, Norbert, 45468 Mülheim an der Ruhr (DE); Von der Bey, Willi, 45478 Mülheim an der Ruhr (DE)

(57) **Zusammenfassung**

Die vorliegende Erfindung betrifft ein Verfahren zum Befestigen einer Bürstendichtung (24) in einer in einem Bauteil (16) ausgebildeten Aussparung (26), dadurch gekennzeichnet, dass die Bürstendichtung (24) unter Verwendung eines Stemmdrahts (34) in der Aussparung (26) fixiert wird.

## Beschreibung

Die vorliegende Erfindung bezieht sich auf ein Verfahren zum Befestigen einer Bürstendichtung in einer in einem Bauteil ausgebildeten Aussparung.

Bürstendichtungen werden zum Abdichten eines Hochdruckbereichs gegenüber einem Niederdruckbereich eingesetzt, wie es häufig bei Gasturbinentriebwerken oder bei anderen Rotor-Stator-Anordnungen erforderlich ist. Die Borsten der Bürstendichtung erstrecken sich dabei im wesentlichen radial in einen ringförmigen Spalt zwischen Welle (Rotor) und Gehäuse (Stator) und dichten diesen ab, um das Strömen von Fluiden in einer axialen Richtung entlang der Welle zu hemmen.

Die Bürstendichtung selbst kann verschieden ausgestaltet sein. Die DE-OS 39 07 614 und die DE 296 00 193 U1 beschreiben beispielsweise Bürstendichtungen, deren Borsten einen Kernring derart umschlingen, dass sie einseitig im wesentlichen radial von diesem vorstehen. Der Kernring und die um diesen angeordneten Borsten sind wiederum von einem Klemmring umschlossen, der verhindert, dass sich die Borsten von dem Kernring lösen.

Die DE 696 27 674 T2 beschreibt eine Bürstendichtung, deren Borsten zwischen zwei einander gegenüberliegenden Stützringen angeordnet sind, wobei die Borsten mittels Schweißen oder mit Hilfe von anderen dem Durchschnittsfachmann bekannten Mechanismen zwischen den Stützringen gehalten sind.

Zur Befestigung der Bürstendichtung an einem Bauteil, wie beispielsweise an einem Stator einer Rotor-Stator-Anordnung, ist es bekannt, das Bauteil und die Bürstendichtung unmittelbar miteinander zu verstemmen, um den erforderlichen Kraftschluss zu erzeugen. Ein Nachteil dieser Befestigungsmethode besteht darin, dass der erzeugte Kraftschluss nicht ohne weiteres lösbar ist, weshalb ein Ausbau der Bürstendichtung zu Wartungs- und Reparaturzwecken kaum möglich ist. Alternativ kann die Bürstendichtung formschlüssig an dem Bauteil gesichert werden. Zur formschlüssigen Aufnahme der Bürstendichtung müssen jedoch meist Hinterschneidungen im Bauteil erzeugt werden, was aufwendig und kostenintensiv ist.

Es ist eine Aufgabe der vorliegenden Erfindung, ein alternatives Verfahren zum Befestigen einer Bürstendichtung in einer in einem Bauteil ausgebildeten Aussparung zu schaffen. Diese Aufgabe wird gemäß der vorliegenden Erfindung durch ein Verfahren nach Anspruch 1 gelöst. Die abhängigen Ansprüche beziehen sich auf individuelle Ausgestaltungen des erfindungsgemäßen Verfahrens.

Bei dem Verfahren zum Befestigen einer Bürstendichtung in einer in einem Bauteil ausgebildeten Aussparung gemäß der vorliegenden Erfindung wird die Bürstendichtung erfindungsgemäß unter Verwendung eines Stemmdrahts in der Aussparung fixiert. Dazu wird die Bürstendichtung in die Aussparung eingesetzt und mit Hilfe des Stemmdrahts in dieser verklemmt. Bei der Aussparung kann es sich beispielsweise um eine einfache umlaufende Nut handeln, die im Gegensatz zur formschlüssigen Befestigungsvariante keine Hinterschneidungen aufweisen muss. Gegenüber der eingangs beschriebenen bekannten kraftschlüssigen Befestigungsalternative, die durch unmittelbaren Kraftschluss zwischen Bauteil und Bürstendichtung erzeugt wird, kann die mit Hilfe des erfindungsgemäßen Verfahrens befestigte Bürstendichtung nachträglich ausgebaut werden, ohne dabei die Bürstendichtung oder das Bauteil zu beschädigen, indem der Stemmdraht ausgedreht oder ausgezogen wird. Auf diese Weise können an der Bürstendichtung Reparatur- und Wartungsarbeiten durchgeführt werden.

Bei dem Bauteil handelt es sich vorteilhaft um ein Teil einer Rotor-Stator-Anordnung, insbesondere um einen Stator, wobei die Aussparung, die Bürstendichtung sowie der Stemmdraht im wesentlichen ringförmig ausgebildet sind.

Vorteilhaft wird eine Dichtspitze vorgesehen, die entweder in das Bauteil oder in die Bürstendichtung integriert ist oder alternativ als separates Bauteil zusammen mit der Bürstendichtung unter Verwendung des Stemmdrahts in der Aussparung fixiert wird. Die Dichtspitze schützt die Borsten der Bürstendichtung vor Beschädigungen und verbessert die Dichtwirkung der Bürstendichtung.

Nachfolgend werden verschiedene Ausgestaltungen des erfindungsgemäßen Verfahrens unter Bezugnahme auf die beiliegende Zeichnung genauer beschrieben. Darin zeigen
- Fig. 1: eine teilweise Querschnittansicht einer Rotor-Stator-Anordnung mit einer Bürstendichtung;
- Fig. 2: eine vergrößerte Ansicht eines in Fig. 1 durch einen Kreis markierten Ausschnitts, der die Anordnung der Bürstendichtung genau darstellt, und
- Fign. 3-8: Querschnittansichten alternativer Bürstendichtungsanordnungen,
wobei die in den Figuren 1 bis 8 gezeigten Bürstendichtungen unter Anwendung des erfindungsgemäßen Verfahrens befestigt sind.

Gleiche Bezugsziffern beziehen sich nachfolgend auf gleichartige Bauteile.

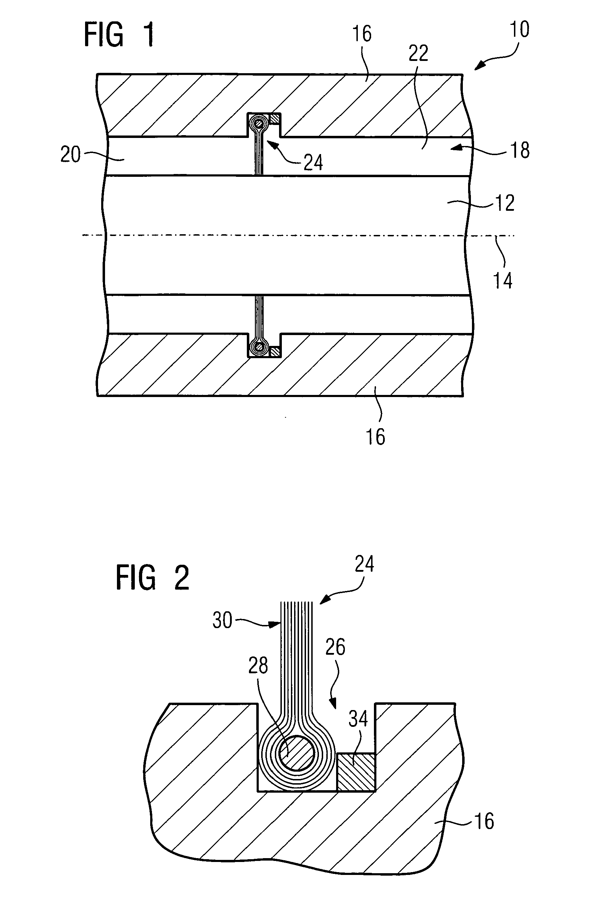

Fig. 1 ist eine Teilquerschnittansicht einer Rotor-Stator-Anordnung (10). Den Rotor der Rotor-Stator-Anordnung (10) bildet eine rotationssymmetrische Welle (12), die um eine Drehachse (14) drehbar gelagert ist. Der Stator ist in Form eines ortsfesten Gehäuses (16) vorgesehen. Der zwischen der Welle (12) und dem Gehäuse (16) definierte Ringraum (18) umfasst zwei Kammern (20) und (22), die mit Hilfe einer sich im wesentlichen radial zwischen der Welle (12) und dem Gehäuse (16) erstreckenden Bürstendichtung (24) voneinander getrennt sind. Die Bürstendichtung (24) dient zum Abdichten eines Hochdruckbereichs innerhalb der Kammer (20) gegenüber einem Niederdruckbereich innerhalb der Kammer (22), um eine Strömung eines Fluids vom Hochdruckbereich in Richtung des Niederdruckbereichs entlang der Welle (12) zu hemmen. Die Anordnung und Befestigung der Bürstendichtung (24) an dem Gehäuse (16) wird unter Bezugnahme auf Fig. 2 genauer beschrieben.

Fig. 2 ist eine vergrößerte Querschnittansicht, die die Anordnung und die Befestigung der in Fig. 1 dargestellten Bürstendichtung (24) an dem Gehäuse (16) genauer zeigt. In dem Gehäuse (16) ist eine ringförmige Nut (26) ausgebildet, in welche die ebenfalls ringförmig ausgebildete Bürstendichtung (24) eingesetzt ist. Die Bürstendichtung (24) umfasst einen ringförmigen Kerndraht (28), um den eine Vielzahl einzelner Borsten (30) gelegt und befestigt ist, wobei sich die freien Enden der Borsten (30) vom ringförmigen Kerndraht (28) radial einwärts in Richtung der Welle (12) erstrecken und an dieser anliegen. Zur Befestigung der Bürstendichtung (24) in der in dem Gehäuse (16) ausgebildeten Nut (26) ist in die Nut (26) ein im wesentlichen ringförmiger Stemmdraht (34) mit rechteckigem Querschnitt eingelegt, der die Bürstendichtung (24) in der Nut (26) fixiert.

Soll die in Fig. 2 dargestellte Bürstendichtung (24) zu Reparatur- und/oder Wartungszwecken aus der Nut (26) entfernt werden, so kann der Stemmdraht (34) beispielsweise aus der Nut (26) herausgezogen, ausgedreht oder auf andere Art und Weise entfernt werden, ohne dabei die Bürstendichtung (24) zu beschädigen.

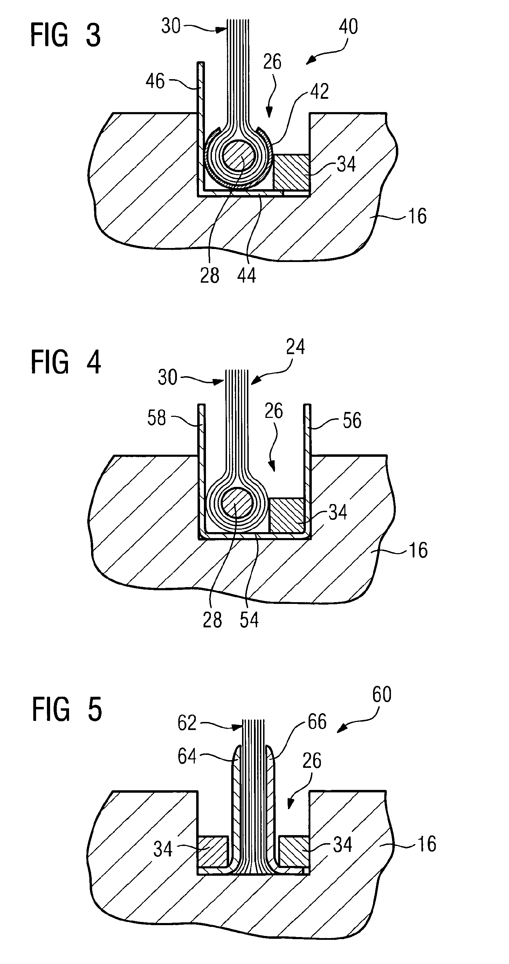

Fig. 3 zeigt eine Querschnittansicht einer Bürstendichtung (40), die ebenfalls unter Verwendung des erfindungsgemäßen Verfahrens in einer in einem Gehäuse (16) ausgebildeten ringförmigen Nut (26) befestigt ist. Die Bürstendichtung 40 umfasst ähnlich wie die in Fig. 2 dargestellte Bürstendichtung (24) einen ringförmigen Kerndraht (28), um den eine Vielzahl von Borsten (30) gelegt ist, wobei sich die Borsten (30) vom Kerndraht (28) radial einwärts erstrecken. Zur besseren Fixierung der Borsten (30) um den Kerndraht (28) ist ein Klemmring (42) in Form eines geschlitzten Rohres vorgesehen, das an seinen freien Enden miteinander verbunden ist. Ferner ist zum Schutz der Borsten (30) und der Bürstendichtung (40) eine Dichtspitze in Form eines Blechringes (44) mit L-förmigem Querschnitt vorgesehen, der in die Nut (26) eingesetzt ist, wobei ein sich im wesentlichen senkrecht zur Welle (12) erstreckender Abschnitt 46 des Blechringes (44) radial über den Innenumfang des Gehäuses (16) vorsteht. Der Blechring (44) und die Bürstendichtung (40) sind ähnlich, wie es in Fig. 2 gezeigt ist, mit einem ringförmigen Stemmdraht (34) in der Nut (26) fixiert. Auch hier können die Bürstendichtung (40) und der Blechring (44) durch Entfernen des Stemmdrahtes (34) in einfacher Art und Weise ohne Beschädigungen aus der Nut (26) entfernt werden.

Gemäß der in Fig. 4 dargestellten Anordnung ist in die in dem Gehäuse (16) ausgebildete ringförmige Nut (26) eine Dichtspitze in Form eines Blechringes (54) mit U-förmigen Querschnitt eingesetzt, wobei die freien Schenkel (56) und (58) des Blechringes (54) radial über den Innenumfang des Gehäuses (16) vorstehen. In den Blechring (54) ist die Bürstendichtung (24) eingesetzt und mittels eines Stemmdrahtes (34) fixiert.

Fig. 5 zeigt eine Querschnittansicht einer ringförmigen Bürstendichtung (60), die sich radial einwärts erstreckende Borsten (62) umfasst, die seitlich mit ringförmigen Blechringen (64) und (66) eingefasst sind, die einen im wesentlichen L-förmigen Querschnitt aufweisen. Die Blechringe (64) und (66) dienen zum einen zum Befestigen der Borsten (62) und zum anderen als Dichtspitzen. Die Bürstendichtung (60) ist in einer in einem Gehäuse (16) vorgesehene Nut (26) eingesetzt und beidseitig mit Hilfe jeweils eines Stemmdrahts (34) fixiert.

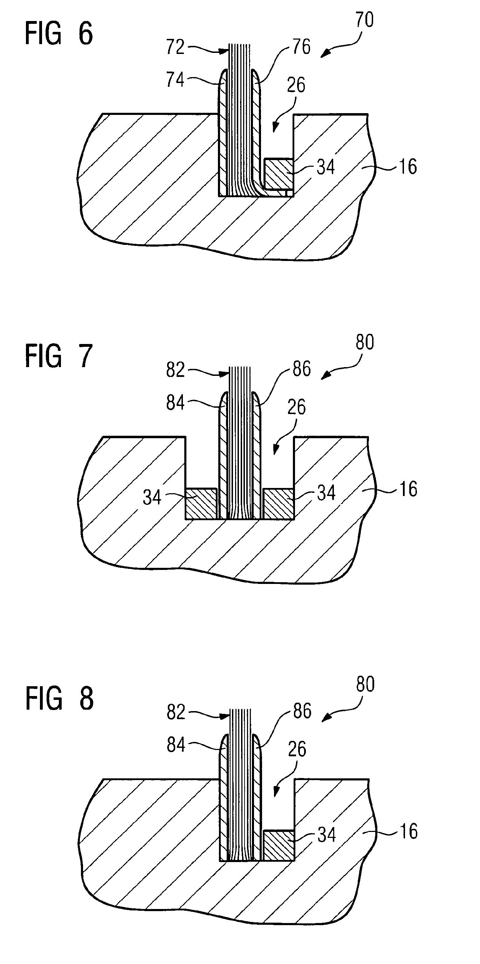

Fig. 6 zeigt eine Querschnittansicht einer ringförmigen Bürstendichtung (70), deren sich radial erstreckende Borsten (72) beidseitig mit Blechringen (74) und (76) eingefasst sind, wobei der Blechring (74) einen I-förmigen und der Blechring (76) einen L-förmigen Querschnitt aufweist. Jeweils ein freies Ende der Blechringe (74) und (76) steht über den Innenumfang des Gehäuses (16) radial vor und dient als Dichtspitze. Die Bürstendichtung (70) ist in der Nut (26) des Gehäuses (16) mit Hilfe eines ringförmigen Stemmdrahtes (34) fixiert.

Fig. 7 zeigt eine Querschnittansicht einer weiteren ringförmigen Bürstendichtung (80), die in einer in einem Gehäuse (16) vorgesehenen ringförmigen Nut (26) angeordnet ist. Die Bürstendichtung (80) umfasst sich radial erstreckende Borsten (82), die beidseitig mit einem Blechring (84) und (86) eingefasst sind. Die Blechringe (84) und (86) weisen einen I-förmigen Querschnitt auf, wobei jeweils ein freies Ende der Blechringe (84) und (86) radial über den Innenumfang des Gehäuses (16) vorsteht. Die Bürstendichtung (80) ist beidseitig mit jeweils einem Stemmdraht (34) in der Nut (26) fixiert.

Fig. 8 entspricht im wesentlichen Fig. 7, abgesehen von der Tatsache, dass die dargestellte Bürstendichtung (80) nur mit einem einzelnen Stemmdraht (34) fixiert ist.

Es sollte klar sein, dass die in den Figuren dargestellten Anordnungen nicht einschränkend auszulegen sind. Vielmehr können Modifikationen vorgenommen werden, ohne den Schutzbereich der vorliegenden Erfindung zu verlassen, der durch die beiliegenden Ansprüche definiert ist.

## Patentansprüche

1. Verfahren zum Befestigen einer Bürstendichtung in einer in einem Bauteil ausgebildeten Aussparung,
**dadurch gekennzeichnet, dass**
die Bürstendichtung unter Verwendung eines Stemmdrahts in der Aussparung fixiert wird.

2. Verfahren nach Anspruch 1,
wobei das Bauteil ein Teil einer Rotor-Stator-Anordnung ist.

3. Verfahren nach einem der vorhergehenden Ansprüche,
wobei eine Dichtspitze vorgesehen wird.

4. Verfahren nach Anspruch 3,
wobei die Dichtspitze in das Bauteil integriert ist.

5. Verfahren nach Anspruch 3,
wobei die Dichtspitze ein separates Bauteil ist und zusammen mit der Bürstendichtung unter Verwendung des Stemmdrahts in der Aussparung fixiert wird.

6. Verfahren nach einem der vorhergehenden Ansprüche,
wobei die Bürstendichtung Stützringe aufweist.
